# EUROPÄISCHE PATENTSCHRIFT

(11) **EP 1 119 235 B1**
(45) Veröffentlichungstag und Bekanntmachung des Hinweises auf die Patenterteilung: **11.02.2004**
(21) Anmeldenummer: 99968596.9
(22) Anmeldetag: 07.09.1999
(51) Int. Cl.: A01J 5/00

(54) **MELKBECHER**
MILKING CUP
GOBELET TRAYEUR

(30) Priorität: 07.09.1998 DE 19840732; 19.10.1998 DE 19847912; 22.03.1999 DE 19912615
(43) Veröffentlichungstag der Anmeldung: 01.08.2001
(73) Patentinhaber: Happel, Fritz, D-87650 Baisweil (DE); Happel, Werner, 87654 Friesenried (DE)
(72) Erfinder: Happel, Fritz, D-87650 Baisweil (DE); Happel, Werner, 87654 Friesenried (DE)
(74) Vertreter: Polte, Willi, Dr.-Ing. Dipl.-Ing.
(86) Internationale Anmeldenummer: PCT/DE1999/002834
(87) Internationale Veröffentlichungsnummer: WO 2000/013489

(56) Entgegenhaltungen:
- EP-A- 0 266 809
- US-A- 2 621 626
- US-A- 3 659 558
- US-A- 3 696 790
- US-A- 4 200 058

## Beschreibung

Die Erfindung betrifft einen Melkbecher gemäss dem Oberbegriff des Patentanspruchs 1 und einen dafür geeigneten zitzengummi.

Ein derartiger, beispielsweise in der CH-PS 628 496 offenbarter Melkbecher hat eine Melkbecherhülse, in der ein Zitzengummi aufgenommen ist.

Um ein sicheres Öffnen im Saugtakt zu erreichen, ist der bekannte Zitzengummi in der Melkbecherhülse eingespannt, wobei ein Zitzengummikopf an einer oberen Einspannstelle der Melkbecherhülse festgelegt ist, während der vom Zitzengummikopf entfernte Endabschnitt an einer unteren Einspannstelle festgelegt ist. Dieser Endabschnitt des Zitzengummis ist über einen Milchschlauch an eine Unterdruckquelle, beispielsweise eine Vakuumpumpe angeschlossen. Zwischen der Melkbecherhülse und dem darin eingespannten Zitzengummi ist ein Aussenraum ausgebildet, der über einen geeigneten Anschluss mit Unterdruck oder Atmosphärendruck beaufschlagbar ist. Durch Erhöhen des Druckes im Aussenraum gegenüber dem durch den Zitzengummi definierten Zitzenaufnahmeraum können in der Massagephase die Umfangswandungen des Zitzengummis abschnittsweise in Anlage an die Zitze gebracht werden.

Bei der bekannten Lösung ist in dem sich an den Zitzengummi anschliessenden Milchschlauch eine Abschlusseinrichtung vorgesehen, über die die Verbindung zur Unterdruckquelle gesperrt oder gedrosselt werden kann. Diese Abschlusseinrichtung ist durch eine membranartige Ausgestaltung der Milchschlauchwandung realisiert.

Bei diesem bekannten Melkbecher ist von Nachteil, dass im Innenraum unterhalb der Zitze ein relativ grosses Volumen verbleibt, da die Absperrung vom Vakuum erst im anschliessenden Milchschlauch erfolgt. Die Entlastung der Zitze vom Vakuum wird durch das relativ grosse Volumen erschwert.

Beim Einsatz bekannter Melkbecher mit normalwandigen Zitzengummis zeigte es sich, dass in Folge einer ungünstigen, strapaziösen Massage der Zitze durch die Wandungen des Zitzengummis insbesondere bei empfindlichen Kühen der modernen Zuchtrichtungen eine optimale Melkarbeit nicht gegeben ist.

Zur Ausräumung dieses Nachteils wird in der EP 0 593 563 B1 vorgeschlagen, den Zitzengummi mit einer vergleichsweise dünnen Wandstärke auszuführen. Durch diesen dünnwandigen Zitzengummi kann zwar auch bei empfindlichen Kühen eine Überreizung der Zitze verhindert werden, problematisch ist jedoch, dass aufgrund der Dünnwandigkeit eine für den Milchentzug in der Saugphase notwendige Öffnung des Zitzengummis nicht gewährleistet ist. Des weiteren kann mit derart dünnwandigen Zitzengummis weder eine gewünschte Folgesteuerung der Massage noch eine optimale Abdichtung an der Zitze erreicht werden.

In der US 3,659,558 ist ein Zitzengummi mit verstärkten Wandungsbereichen und dazwischenliegenden Wandungsbereichen mit dünner Wandstärke offenbart.

Der Erfindung liegt die Aufgabe zugrunde, einen Melkbecher und einen dafür geeigneten Zitzengummi zu schaffen, der auch bei empfindlichen Kühen einsetzbar ist und bei dem die Öffnung während der Saugphase gewährleistet ist.

Diese Aufgabe wird hinsichtlich des Melkbechers durch die Merkmalskombination des Patentanspruchs 1 und hinsichtlich des Zitzengummis durch die Merkmalskombination des Patentanspruchs 22 gelöst.

Erfindungsgemäß ist der Melkbecher mit einem Abschluss versehen, über den die Verbindung zur Unterdruckquelle gedrosselt oder abgesperrt werden kann. Diese Drosselung bzw. Absperrung der Verbindung erfolgt erfindungsgemäss über einen im Zitzenaufnahmebereich ausgebildeten Dünnwandbereich des Zitzengummis.

Aus dem eingangs beschriebenen Stand der Technik gemäss der CH-PS 628 496 ist es zwar per se bereits bekannt, zwischen der Unterdruckquelle und dem Zitzengummi einen Abschluss vorzusehen, dieser Abschluss ist jedoch im Milchschlauch ausgebildet, der je nach Ausführungsform im Anschluss an den Zitzengummi oder aber im Bereich zwischen der Niederdruckquelle und einem Sammelstück ausgebildet ist. Durch die erfindungsgemässe Lösung, diesen Abschluss in den Zitzenaufnahmebereich zu integrieren, kann das Volumen im Innenraum unterhalb der Zitze bis zum Abschlusselement zur Absperrung des Vakuums, wesentlich verringert werden. Des weiteren kann bei der erfindungsgemässen Lösung der Dünnwandbereich eine Doppelfunktion übernehmen, die zum einen im Absperren des Abschlusses und zum anderen in der Massage der Zitze liegt.

Der Abschluss ist im Abstand unterhalb der Zitze im Zitzengummiinnenraum ausgebildet.

Der Abschluss hat eine schräg zur Zitzengummi-Längsachse gelegene, zumindest im wesentlichen ringförmige und formstabile Dicht- oder Auflagefläche und eine dieser Fläche gegenüberliegende und an ihr im Entlastungstakt zur Anlage kommende Abschlusswand aufweist, welche von einem Dünnwandbereich des Zitzengummis oder von einem flächigen Abschlusselement gebildet ist, das vom Dünnwandbereich des Zitzengummis getragen oder in diesen integriert ist.

Melkverfahren, die während des Massagetaktes das Vakuum an der Zitze aufheben oder zumindest stark verringern, besitzen bekanntlich grosse Vorteile bezüglich Eutergesundheit und Milchleistung. Die erfindungsgemässe Ausgestaltung eines unmittelbar unterhalb des Zitzenaufnahmebereichs gelegenen Abschlusses zeichnet sich durch besondere Einfachheit und Funktionssicherheit aus und gewährleistet freien Durchfluss beim Milchabtransport und bei der Reinigung. In der Praxis störende und ggf. separat zu reinigende Zusatzteile werden vermieden. Besonders vorteilhaft ist ferner, dass zum einen während des Massagetaktes eine Entlastung der Zitze durch zumindest weitgehenden Abschluss vom Vakuum erzielt und zum anderen ein störungsfreier Milchabfluss in der Entlastungsphase der Zitze vom Vakuum gewährleistet wird. Dies ist eine Folge davon, dass dann, wenn keine Milch fliesst, ein totaler Abschluss möglich ist, beim Milchfluss jedoch das Abschlussorgan zunächst nur den flüssigkeitsfreien Querschnitt des Durchgangs schliesst und die Milch somit auch bei Entlastung der Zitze vom Vakuum abfliessen kann.

Dieser Abschluss kann so ausgebildet sein, dass der den Abschluss bewirkende Dünnwandbereich gleichzeitig zur Massage der Zitze Verwendung findet, wobei in diesem Falle dieser Dünnwandbereich zur Zitze hin eine zunehmende oder abnehmende Wandstärke aufweisen kann.

Ferner besteht die Möglichkeit, den Zitzenaufnahmeraum mittels eines am Abschluss vorbeigeführten Kanals mit Atmosphäre zu belüften.

Eine besonders vorteilhafte Möglichkeit des erfindungsgemässen Abschlusses besteht darin, mittels eines Verbindungskanals zur Atmosphäre, der in der Wandung der Abschlussfläche vorzugsweise mit einer Düse endet, eine periodische Belüftung zu erreichen, die im Saugtakt den Raum unterhalb der Zitze mit Atmosphäre verbindet und so einen zügigen Abtransport der unterhalb der Zitze angesammelten Milch bewirkt. Durch diese Art der Belüftung wird eine Räumung des Innenraumes unterhalb der Zitze in Milchflussrichtung erreicht, bevor im nachfolgenden Massagetakt eine Schliessung des Abschlusses erfolgt. Beim Abschluss des Zitzenaufnahmeraumes vom Vakuum kann gleichzeitig durch den Dünnwandbereich bzw. durch das Abschlusselement der Verbindungskanal geschlossen werden, wobei die Öffnung des Verbindungskanals von einem Ringwulst umgeben sein kann.

Auch besteht die Möglichkeit, eine zum Dünnwandbereich hin vorstehende flexible, elastische Düse zu verwenden, so dass auch die Möglichkeit einer mechanischen Reinigung durch Berührung der flexiblen Düse durch den Dünnwandbereich oder das Abschlusselement gegeben ist. Diese Ausführung bietet sich besonders an, wenn der erfindungsgemässe Abschluss als Bestandteil eines gespritzten Formteils gefertigt wird.

Alternativ kann der Düse ein Reinigungsstift zugeordnet sein, der von aussen in die Düsenbohrung einführbar und verschiebbar im Melkbecher geführt ist.

Je nach Anordnung der Einmündung der Verbindung zur Atmosphäre in die ovale Ringfläche des Abschlusses wird eine Änderung bezüglich Zeitpunkt der Öffnung bzw. Schliessung des Verbindungskanals und somit auch eine Änderung der eingelassenen Luftmenge (L/min.) erreicht. Bezüglich der Milchqualität sind grosse Luftmengen nicht erwünscht, da sie zur Bildung von freien Fettsäuren führen. Durch den periodischen Einlass der Luft direkt unterhalb der Zitze ist es möglich, mit relativ kleinen Luftmengen auszukommen.

Diese Art der Belüftung im Saugtakt hat weitere Vorteile, da die Belüftung direkt unterhalb der Zitze erfolgt und so auch bei hohem Milchfluss kein Hydraulikeffekt entsteht, der bei den bisherigen Melkbechern grosse Querschnitte der abführenden Milchleitung erfordert und ein derartiges Melkzeug sehr unhandlich macht.

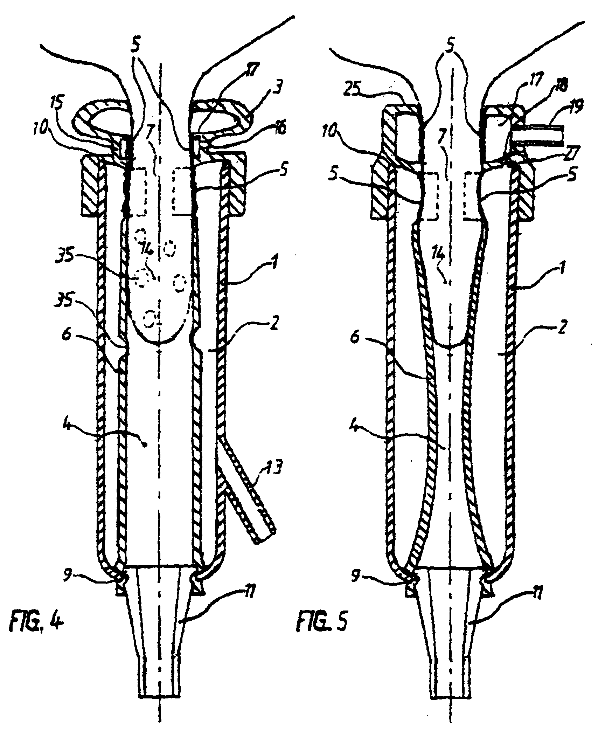

Bei dieser Form der periodischen Belüftung im Saugtakt sind nur normale, wie in Fig. 4 gezeigt, dem Milchfluss entsprechende Querschnitte der vom Melkbecher abführenden Milchleitung erforderlich, so dass ein derartiges Melkzeug besonders leicht zu handhaben ist.

Durch Anordnung eines Ventils im Verbindungskanal zur Atmosphäre ist eine periodische Belüftung auch im Massagetakt möglich.

Durch die Abstützung über die dickwandigen Bereiche des Zitzengummis können die Dünnwandbereiche derart ausgestaltet werden, dass sie auch bei eingespanntem Zitzengummi und bei Druckausgleich im Innenraum und im Aussenraum nur mit einer vernachlässigbaren Längsspannung beaufschlagt sind, so dass eine Radialauslenkung der membranförmigen Dünnwandbereiche unterstützt ist.

Durch geeignete Positionierung dieser Dünnwandbereiche kann des weiteren das Haften des Melkbechers an der Zitze verbessert werden, so dass sowohl ein Abrutschen, als auch ein Klettern des Zitzengummis während des Melkens verhinderbar ist.

Eine eventuell notwendige Axialspannung oder Rückstellkraft in den nahezu runden Querschnitt des Zitzengummis in der Saugphase kann von den dickeren Wandungsteilen oder Abspann-, Abstütz- oder Stegteilen übernommen werden. Der Dünnwandbereich dient vorwiegend der Massage oder der Abdichtung und Stützung der Zitze und ist so gestaltet, dass der Dünnwandbereich zumindest in einer Richtung zwischen zwei dickwandigeren Wandungsteilen, Abspann-, Abstütz- oder Stegteilen entweder extrem dehnfähig ist oder eine grössere Länge hat, als der direkte Abstand zwischen den Spann-, Stütz- oder Stegteilen.

Durch die Verwendung erfindungsgemäss gestalteter Dünnwandbereiche in einem Melkbecher werden die bei herkömmlichen Melkbechern bestehenden Nachteile bezüglich Haftung und Massage weitestgehend beseitigt, es wird eine gute, keine Abschnürung verursachende Haftung des Melkbechers an der Zitze erreicht, und es bietet sich dabei gleichzeitig die Möglichkeit, den Massageablauf physiologisch zu verbessern, indem bei Beginn des Saugtaktes die Massage zuerst an der Zitzenbasis und dann an der Zitzenspitze aufgehoben werden kann.

Die Verwendung von erfindungsgemässen Dünnwandbereichen zur Massage der Zitze ermöglicht es auch, die schnelle Reaktion solcher Dünnwandbereiche auf Druckdifferenzen zu nutzen und bietet damit die Möglichkeit, eine intensive Stimulation mit hohen Pulsfrequenzen durchzuführen. Eine solche Vibrationsstimulation ist besonders wirkungsvoll, da sie bei gleichzeitigem Abschluss des Vakuums vom Zitzenaufnahmeraum erfolgen kann. Im Gegensatz zum konventionellen Verfahren, bei dem eine Stimulation der Zitze unter Vakuum stattfindet.

Derartige Dünnwandbereiche im Zitzengummiaufnahmebereich können je nach konstruktiver Anordnung verschiedene Aufgaben übernehmen, sie können ringförmig und im Längsschnitt eingebeult oder wellenförmig gestaltet sein und/oder zueinander unterschiedliche Wandstärken besitzen. Unter Zitzenaufnahmebereich wird derjenige Teil des Zitzengummis angesehen, der durchmessermässig zur Aufnahme der Zitze geeignet ist. Dieser Bereich kann aber eine grössere Axiallänge als die Zitze aufweisen.

Um die Haftung zu verbessern, wird ein Dünnwandbereich z. B. oberhalb der Einspannung einer Melkbecherhülse unterhalb des Zitzengummikopfes oder direkt unterhalb eines Einführungsringes eingesetzt, wobei die Aussenseite des Dünnwandbereichs mit Atmosphäre beaufschlagt ist, oder an einem geschlossenen Aussenraum anliegt, durch dessen Volumen die Dehnung des Dünnwandbereiches beeinflusst werden kann (Figur 4, 6, 7). Der an die Aussenseite des Dünnwandbereichs angrenzende Aussenraum kann ein Ringraum oder eine Kammer sein. Mehreren Dünnwandbereichen kann ein gemeinsamer Aussenraum zugeordnet sein.

Erfolgt die Abstützung des Kopfes nahe am Dünnwandbereich, so bleibt der Kopf beweglicher (Figur 4). Auch ist es möglich, diesen Aussenraum mittels einer Verbindungsleitung derart mit einem Steuerdruck zu beaufschlagen, dass sich eine Druckdifferenz zum Zitzenaufnahmeraum (Innenraum) einstellt. So kann z. B. bei Vakuumabfall im Innenraum oder einer unerwünschten Positionsänderung des Melkbechers Überdruck eingesteuert werden, so dass eine sofortige Anlage des Dünnwandbereiches an die Zitze erreicht wird.

Wird diese Kammer an die Pulsation eines Pulsators angeschlossen, kann ein derartiger Dünnwandbereich zur Verbesserung der Haftung, Massage oder Stimulation verwendet werden, da er insbesondere bei Beginn des Massagetaktes durch Beaufschlagung der Aussenseite durch Differenzdruck zum Zitzenaufnahmeraum eine frühere Anlage an die Zitze bewirkt, ohne eine Abschnürung der Zitze an der Basis zu verursachen. Auch kann axial gesehen eine Zeitfolge der Anlage an die Zitze beziehungsweise Massage durch den Zitzengummi auf die Zitze bewirkt werden, indem z. B. von der Zitzenbasis nach unten gesehen der anschliessende, den Zitzenaufnahmeraum begrenzende Schlauchteil des Zitzengummis eine entsprechend dickere Wandung besitzt, oder in einen kleineren Durchmesser übergeht. Falls erforderlich kann beim Schlauchteil die Einfaltrichtung bezüglich des Querschnittes durch Rippen oder unterschiedliche Wandstärken oder ovale Formgebung bestimmt werden.

Ferner können mehrere der erfindungsgemässen Dünnwandbereiche axial untereinander angeordnet sein, so dass sie über den gesamten Zitzenbereich wirksam werden. Dem Dünnwandbereich können jeweils Aussenräume zugeordnet sein, so dass eine Folgesteuerung durchführbar ist, indem diese einem oder mehreren Dünnwandbereichen zugeordnete Aussenräume über Leitungen oder Bohrungen, vorteilhafterweise mit ggf. unterschiedlichen Drosselelementen versehen, miteinander verbindet. Ebenso können die einzelnen Aussenräume der Dünnwandbereiche getrennt angesteuert werden.

Nach einer weiteren Ausgestaltung der Erfindung ist eine Vielzahl kleinflächiger Dünnwandbereiche radial und axial über den Zitzenaufnahmebereich im Schlauchteil eines Zitzengummis verteilt, wobei diese Dünnwandbereiche in ihrer Form vorgebbar und vorzugsweise kreisförmig oder oval gestaltet sind. Vorteilhaft kann es ferner sein, diese Dünnwandbereiche netzförmig über den gesamten Zitzenaufnahmebereich des Schlauchteils verteilt anzuordnen (Fig. 4).

Eine weitere Ausführungsform der Erfindung ist die Ausbildung dieser Dünnwandbereiche als Längsbahnen zwischen dickwandigeren Stegen vorzugsweise im Zitzenaufnahmebereich des Schlauchteils, wobei in diesem Fall der Dünnwandbereich auch axial gespannt sein kann, wenn derselbe zwischen den Längsstegen radial beweglich oder eingebeult ist, wobei im Querschnitt gesehen eine oder mehrere solcher Dünnwandbereiche nebeneinanderliegend am Umfang verteilt werden können.

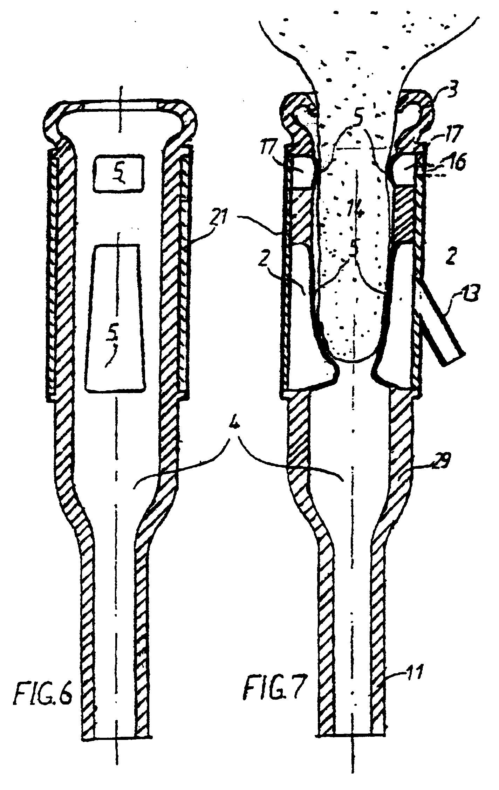

Die Dünnwandbereiche ermöglichen die Konstruktion eines Melkbechers, ohne den bisher üblichen Aussenraum zwischen der Umfangswandung des Zitzengummis und der Innenumfangswandung der Melkbecherhülse. Bei diesem Ausführungsbeispiel wird die Massage allein durch die Dünnwandbereiche ausgeübt, die durch einen Kanal mittels einer Pulsatorsteuerung abwechselnd mit Vakuum oder Atmosphäre und/oder Druckluft beaufschlagt werden. Dabei kann die übrige Zitzenaufnahme ohne Zwischenraum von einer eng an der Melkbecherhülse anliegenden Hülse aus festem oder flexiblem Material umgeben sein oder durch entsprechende Wandungsdimensionierung eigenstabil gestaltet werden. Ein so gestalteter Melkbecher hat den zusätzlichen Vorteil einer leichteren Handhabung durch den wesentlich kleineren Durchmesser (Fig. 6-11).

Bei allen Zitzengummis mit einem oder mehreren Dünnwandbereichen ist eine definierte Einfaltung während der Massage vorteilhaft. Dies kann erreicht werden durch die Relation der Wandstärken zueinander, oder durch ovale Formgebung des Querschnitts, oder durch entsprechende Anlage an der Innenseite der Melkbecherhülse. Dabei kann es erforderlich sein, zwischen der Melkbecherhülse und dem Zitzengummi eine Verdrehsicherung durch ineinandergreifende Vorsprünge und Ausnehmungen vorzusehen.

Um noch eine Erhöhung der Stimulation zu erreichen, kann die Oberfläche der Innenseite eines derartigen Melkbechers mit Dünnwandbereichen z. B. eine rauhe Oberflächenstruktur erhalten, die ähnlich der Oberfläche einer Kalbzunge die Zitzenwandung anregt.

Sonstige Weiterbildung der Erfindung sind Gegenstand der weiteren Unteransprüche.

Die Erfindung und besondere Merkmale der Erfindung werden nachfolgend unter Bezugnahme auf die Zeichnung anhand von Ausführungsbeispielen näher erläutert. Es zeigen:
Figur 1 eine schematische Darstellung eines Melkbechers im Saugtakt mit zitzenkopfseitig im Bereich einer Einspannstelle ausgebildeten Dünnwandbereichen;
Figur 2 den Melkbecher aus Figur 1 im Massagetakt;
Figur 3 eine Schnittdarstellung entlang der Linie A-B in Figur 1;
Figur 4 ein weiteres Ausführungsbeispiel eines Melkbechers mit einem Dünnwandbereich oberhalb der Einspannstelle am Zitzengummikopf einen im Bereich der Einspannstelle ausgebildeten Dünnwandbereich und einem in Axialabstand unterhalb der Einspannstelle ausgebildeten Dünnwandbereich;
Figur 5 eine Variante des in Figur 4 dargestellten Ausführungsbeispiels, wobei ein an den zitzenkopfseitigen Dünnwandabschnitt angrenzender Aussenraum mit einem Steuerdruck beaufschlagbar ist;
Figuren 6 und 7 Darstellungen eines weiteren Ausführungsbeispiels, bei der Zitzengummi mit dickwandigen Abschnitten eng an einer Melkbecherhülse anliegt und die Massage der Zitze über die Dünnwandbereiche erfolgt, wobei Dünnwandbereiche im Bereich einer oberen Einspannstelle und Dünnwandbereiche im Axialabstand unterhalb der oberen Einspannstelle ausgebildet sind;
Figuren 8 und 9 Varianten des in Figur 6 und 7 dargestellten Ausführungsbeispiels, wobei die im Bereich der Einspannstelle vorgesehenen Dünnwandbereiche über einen Anschluss mit einem Steuerdruck beaufschlagbar ist;
Figuren 10 und 11 eine dem Ausführungsbeispiel gemäss den Figuren 8 und 9 entsprechende Variante, bei der die Einführung der Zitze in den Melkbecher über einen Einführungsring erfolgt;
Figuren 12 und 13 ein Ausführungsbeispiel eines erfindungsgemässen Melkbechers im Saug- bzw. Massagetakt mit einem niederdruckseitigen Abschluss, der über einen Teilabschnitt eines Dünnwandbereiches verschliessbar ist.
Figur 14 eine Variante eines Zitzengummis mit integriertem Abschluss, wobei das Schlauchteil unterhalb des Abschlusses auch flexibel sein kann.
Figur 15 eine Variante des in den Figuren 12, 13 dargestellten Ausführungsbeispiels, wobei in einer den Abschluss bildenden Auflagefläche ein Verbindungskanal zur Atmosphäre ausgebildet ist;
Figur 16 eine Draufsicht auf die Auflagefläche des Abschlusses aus Figur 15;
Figur 17 eine Variante des in Figur 15 dargestellten Ausführungsbeispiels, bei dem im Verbindungskanal eine sich zum Dünnwandbereich hin auswölbende Düse ausgebildet ist, der ein bewegbarer Reinigungsstift zugeordnet ist und
Figur 18 eine Variante des in Figur 16 dargestellten Ausführungsbeispiels, bei dem sich eine Düse des Verbindungskanal aus der Aussenumfangsfläche des Melkbechers herauswölbt.

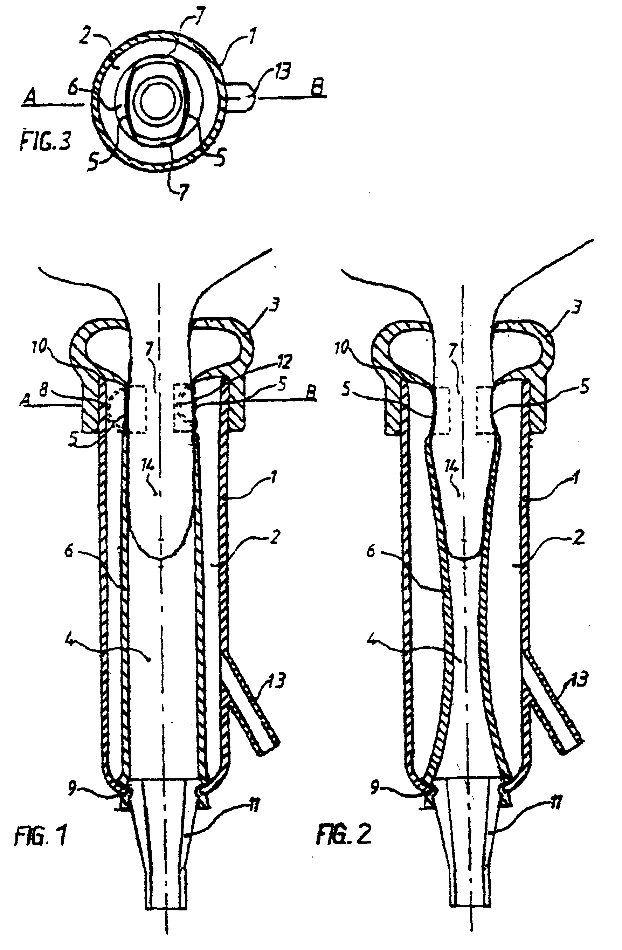

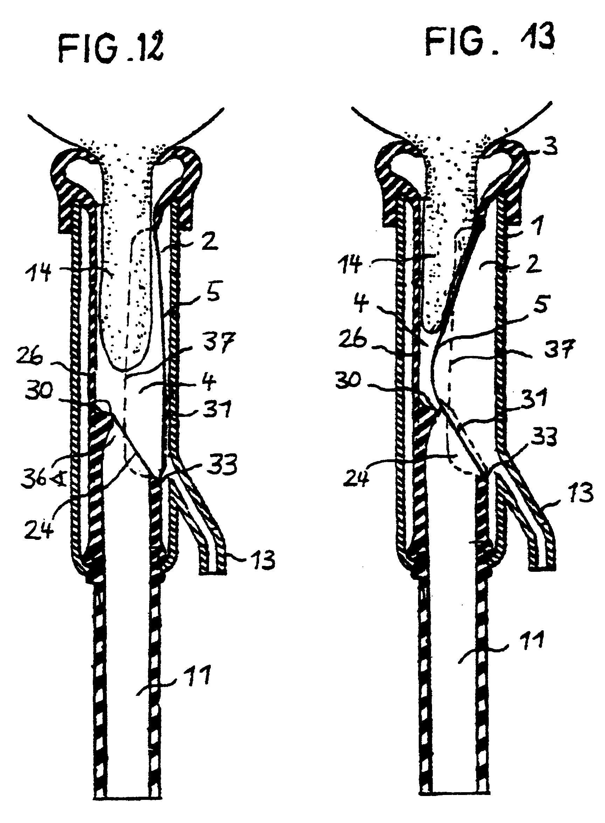

Die Figuren 1 bis 11 zeigen Weiterbildungen, die bei einem Melkbecher gemäß den Figuren 12 bis 18 hinzugefügt werden können.

Figur 1 zeigt eine Ausführungsform eines Zweiraumbecher im Saugtakt gezeigt, bei dem ein Zitzengummi mit einem Kopf 3 in einer Melkbecherhülse 1 zwischen Einspannstelle 9 und 10 derart eingespannt ist, dass der bekannte Aussenraum 2 entsteht, der über einen Stutzen 13 mit einer Pulsatorsteuerung verbunden ist und abwechselnd mit Vakuum oder Atmosphäre oder mit Überdruck beschickt wird. Der Innenraum 4 ist über einen Anschluss (11) mit einem Milchschlauch verbunden, an den eine Niederdruckquelle angeschlossen ist.

Ein Dünnwandbereich 5 befindet sich direkt unterhalb der oberen Einspannstelle 10 der Melkbecherhülse 1, wobei die dickeren Wandbereiche 7 (gestrichelt), die jeweils in Umfangsrichtung des Zitzengummis an einen Dünnwandbereich 5 angrenzen, die Dünnwandbereiche 5 abstützen, so dass in der Grundposition eine Längsspannung der Dünnwandbereiche 5 weitgehend verhindert ist.

Diese Ausführung zeigt eine Anordnung von diametral zueinander angeordneten Dünnwandbereichen 5, die in diesem Beispiel ohne Differenzdruck nach innen gestülpt oder wellenförmig sind 12 (gestrichelt). Im Saugtakt (Fig. 1) steht der Aussenraum 2 unter Vakuum, während im Innenraum 4 nahezu Atmosphäre herrscht, solange der Melkbecher noch nicht an die Zitze angesetzt ist, so dass ein gegenteiliges Ausbeulen 8 (gestrichelt) des Dünnwandbereichs nach aussen erfolgt und von der Melkbecherwandung 1 abgestützt wird und so ein müheloses Ansetzen des Melkbechers an die Zitze möglich ist. Angesetzt an die Zitze (14) herrscht beim Saugtakt im Innenraum 4 Vakuum, ebenso im Aussenraum 2. Der Dünnwandbereich 5 wird dadurch an die Zitze 14 angelegt.

Figur 2 zeigt das Ausführungsbeispiel nach Figur 1 im Massagetakt. Der Aussenraum 2 steht unter Atmosphäre oder Überdruck. Der Differenzdruck zum Innenraum bewirkt bei Beginn der Massagephase eine sofortige Anlage oder Druckreaktion der Dünnwandbereiche 5 auf die Zitze. Das Kollabieren des übrigen Schlauchteils 6 des Zitzengummis zum unteren Einspannende 9 kann je nach konstruktiver Ausgestaltung, d. h. durch Verringern des Durchmesser oder durch eine dickere Wandung verzögert erfolgen. D. h., durch geeignete Abstimmung der Wandstärken und Durchmesser des Zitzengummis kann das Anlegen des Dünnwandbereichs 5 an die Zitze 14 und das Kollabieren des Zitzengummis zeitlich versetzt zueinander ausgeführt werden. Bei dem in Fig. 1 dargestellten Ausführungsbeispiel sind die Dünnwandbereiche im Bereich der oberen Einspannstelle 10 ausgebildet und tragen somit zu einem Fixieren der Zitze 14 bei, so dass ein Klettern verhinderbar ist.

Figur 3 zeigt einen Schnitt A-B der Figur 1 mit zwei Dünnwandbereichen 5. Ebenso können eine oder mehrere solcher Dünnwandbereiche 5 in gleicher oder unterschiedlicher Höhe verwendet werden. Die Abspannstege oder dickere Wandteile 7, welche weitgehend die Längsspannungsfreiheit der Dünnwandbereiche bei eingespanntem Zitzengummi gewährleisten, können breiter oder schmäler sein.

Das Ausführungsbeispiel nach Figur 4 zeigt die Anordnung eines Dünnwandbereichs 5 oberhalb der Einspannstelle 10 des Zitzengummis im Melkbecher, und zwar im Saugtakt. In diesem Falle kann der Dünnwandbereich 5 auch ringartig sein, da er durch einen Stützring 15, der auch aus anderem Material sein kann, z.B. Kunststoff, längsspannungsfrei gehalten wird. Der so entstehende an den Dünnwandbereich 5 angrenzende Aussenraum 17 kann geschlossen oder z. B. über eine Bohrung 16 mit der Atmosphäre verbunden sein. Falls konstruktiv gewünscht, kann der Aussenraum 17 üder die Bohrung 16 auch an eine Pulsatorsteuerung angeschlossen werden.

Bei dieser Konstruktion hat der obere Dünnwandbereich 5 die Aufgabe, im Falle eines hochkriechenden Vakuums zwischen Zitze 14 und Zitzengummiwandung, an der Zitze abdichtend zu wirken. Im Axialabstand unterhalb der oberen Dünnwandbereiche 5 sind weitere Dünnwandbereiche 35 entlang des Zitzenaufnahmeraums verteilt. Diese können beispielsweise ein runde, noppenförmige oder eine sonstige Form aufweisen und verbessern die Haftung an der Zitze 14. Im Aussenraum 2 und im Innenraum 4 herrscht im Saugtakt Vakuum.

Bei dem im Massagetakt gezeigten weiteren Ausführungsbeispiel nach Figur 5 sind zwei Dünnwandbereiche 5 in getrennten Aussenräumen 17 und 2 in Axialrichtung übereinanderliegend angeordnet. Der Aussenraum 17 wird über einen Anschluss 19 mit der Pulsation verbunden. So bietet sich die Möglichkeit einer zeitlichen Abstimmung des Massageverlaufs und des Beginn des Saugtaktes durch zwei getrennte Aussenräume 17 und 2 mit Dünnwandbereichen.

In diesem Fall ist der obere Dünnwandbereich 5 aussenseitig abgestützt und unter einem Einführungsring 25 angebracht. Er kann im drucklosen Zustand auch nach innen gebeult sein, da vor dem Ansetzen des Melkbechers auch im Saugtakt nahezu Atmosphäre im Innenraum 11 und Vakuum im Aussenraum 17 herrscht, so dass der obere Dünnwandbereich 5 nach aussen gebeult wird und ein müheloses Ansetzen möglich ist.

Die eingesteuerten Drücke im Aussenraum 17 können in den weiteren Aussenraum 2 des Melkbechers über zumindest eine Verbindungsleitung 27 weitergeleitet werden, wobei der Druckaufbau im Aussenraum 2 über eine Drossel 18 verzögert werden kann. Die Aussenräume 17 und 2 können auch getrennt angesteuert werden. Die Drossel 18 in der Verbindungsleitung 27 oder Bohrung bewirkt auch bei Beginn der Saugphase, wenn der Aussenraum 17 mit Vakuum verbunden wird, dass eine gewünschte Aufhebung der Massage zuerst im oberen Dünnwandbereich und dann im unteren Massagebereich erfolgt.

Die Figuren 6 und 7 zeigen wiederum in Saugtaktdarstellung anhand einer weiteren Ausführungsvariante die Anwendung der Dünnwandbereiche 5 in einem Melkbecher mit stabiler Wandung, wobei die Dünnwandbereiche von einer Hülse 21 aus festem oder auch flexiblem Material umschlossen werden. Notwendige Verbindungsleitungen können als Rille im Innenkörper oder in der Aussenhülse angebracht werden. Die Dünnwandbereiche 5 sind fensterartig und in ihrer Umrissform weitgehend frei wählbar angelegt. Auch bei dieser Konstruktion kann ein oberer Aussenraum 17 mit Dünnwandbereichen 5 verwendet werden, der, wie bereits beschrieben, geschlossen oder mit Atmosphäre verbunden zur Abdichtung an der Zitze 14 dient. Der Zitzengummikopf 3 wird durch die kurz ausgeführte Melkbecherhülse 21 derart abgestützt, dass die Dünnwandbereiche 5 spannungsfrei bleiben. Bei dieser Ausführungsvariante erfolgt die Abdichtung und Massage der Zitze 14 lediglich über die oberen Dünnwandbereiche 5 bzw. die unteren entlang des Zitzenendes anliegenden Dünnwandbereiche 5 mit grösserer Axialerstreckung. Die Zitzengummiaussenwandung ist von der Melkbecherhülse 21 eng ohne Zwischenraum umschlossen. Die Verbindung an die Pulsation erfolgt über einen Anschluss 13. Das stabile Schlauchteil 29 ist bei 11 mit der Unterdruckquelle verbunden.

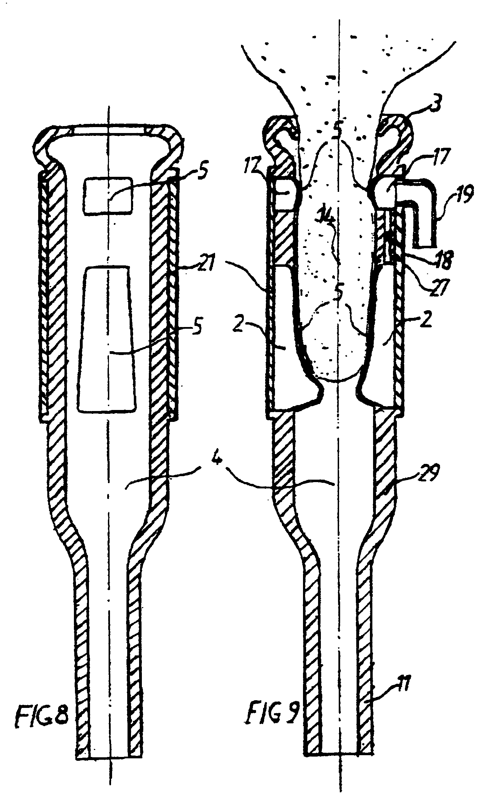

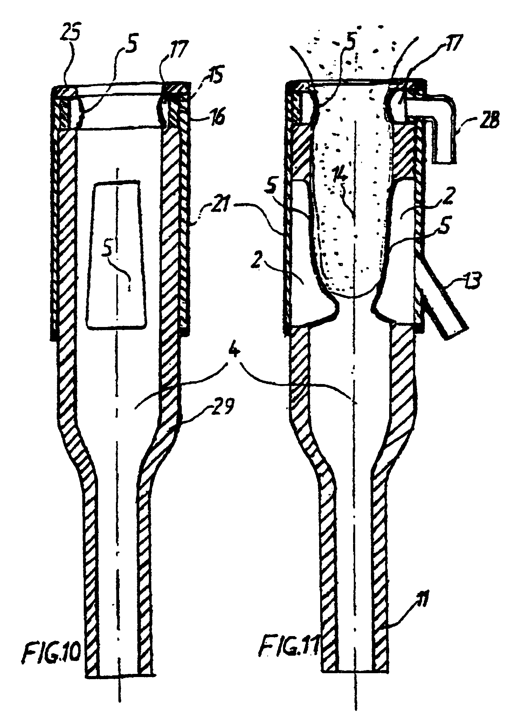

Die Figuren 8 und 9 zeigen ebenfalls in Saugtaktdarstellung eine Variante des in Fig. 8, 9 dargestellten Ausführungsbeispiels, bei dem der Aussenraum des oberen Dünnwandbereiches 5 über den Stutzen 19 mit der Pulsation verbunden ist, so dass der Aussenraum 17 abwechselnd mit Vakuum, Atmosphäre oder Überdruck beschickt werden kann. Diese Drücke können gleichzeitig, oder vorzugsweise verzögert durch die Drossel 18 über die Verbindungsleitung 27 in den an die untenliegenden Dünnwandbereiche angrenzenden Aussenraum 2 weitergeleitet werden (wie in Figur 5 bereits beschrieben). Ebenso können die getrennten Aussenräume 17 und 2 auch getrennt angesteuert werden. Das Schlauchteil 29 ist vorzugsweise flexibel ausgebildet.

Die Ausführungsvariante nach den Figuren 10 und 11 unterscheiden sich von dem vorher beschriebenen Melkbecher darin, dass der Aussenraum 17 direkt unter einem Einführungsring 25 liegend als Ringraum mit einem eigenen Anschlussstutzen 28 ausgebildet ist. Der Aussenraum 17 und die Aussenräume 2 können mit Stutzen 13 und 28 getrennt mit Vakuum, Atmosphäre oder Überdruck beschickt werden. Der Innenraum 4 ist mit der Unterdruckquelle verbunden. Durch entsprechende Ansteuerung über die Stutzen 13 und 28 kann jede gewünschte zeitliche Voreilung oder Verzögerung hinsichtlich des Wirksamwerdens der jeweiligen Dünnwandbereiche 5 realisiert werden.

Figur 12 zeigt eine besonders vorteilhafte Nutzung eines erfindungsgemässen Dünnwandbereichs zur Realisierung eines Abschlusses innerhalb eines Zitzengummis, wobei die Darstellung dem Saugtakt entspricht.

Der Zitzengummi 6 besitzt unterhalb des Zitzenaufnahmeraumes einen kleineren Innendurchmesser, wobei durch den Durchmesserunterschied eine eine Abschlussöffnung umgreifende Auflagefläche 24 gebildet wird. Die Abschlussöffnung 24 ist im Zusammenwirken der Auflagefläche 24 mit dem als Schliesskörper 31 wirkenden Dünnwandbereich verschliessbar oder zumindest in der lichten Weite verringerbar, so dass ein Abschluss gegenüber der Niederdruckquelle durchführbar ist.

Der kleinere Innendurchmesser kann assymmetrisch zum grösseren Durchmesser des Schlauchteils angeordnet sein. Der Winkel 36 der Auflagefläche 24 beträgt vorzugsweise weniger als 90° zur Längsachse. Vorteilhafterweise wird die Auflagefläche 24 als wulstförmige Erhebung ausgebildet.

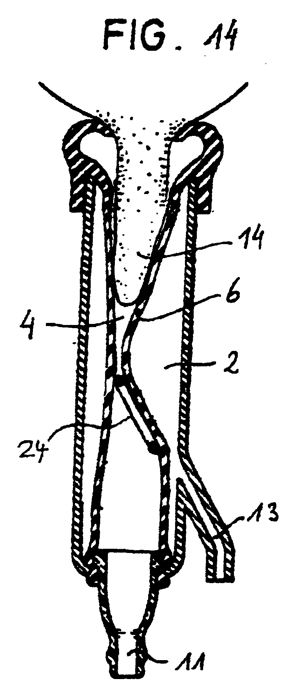

Die Wandung dieses Ausführungsbeispiels ist unterhalb des Auflageflächenendes 30 so starkwandig, dass sie auf die beim Melken auftretenden Druckunterschiede nicht oder nur unwesentlich reagiert. Das zitzenaufnahmeraumseitige Schlauchteil 26 ist oberhalb des Abschlusses flexibel und hat einen Dünnwandbereich 5, der etwa wie in der gestrichtelten Linie 37 angezeigt verläuft und am untenliegenden Auflageflächenende 33 endet. Im Saugtakt herrscht im Innenraum 4 an der Zitze 14 wie auch im Aussenraum 2 Vakuum, so dass der Dünnwandbereich 5 die Abschlussöffnung freigibt und keinen Massagedruck auf die Zitze 14 ausübt. Im Massagetakt, der in Figur 13 gezeigt ist, wird der Aussenraum 2 über den Stutzen 13 mit Atmosphäre oder Überdruck beschickt. Dies bewirkt, dass der Dünnwandbereich 5 nach innen in Richtung der Auflagefläche 24 und des Schlauchteils 26 gedrückt wird und vorzugsweise zum Grossteil über die Kante der Grenzlinie 37 muldenförmig kollabiert.

Das Anlegen des Dünnwandbereichs 5 an die ringförmige, schräg zur Längsachse verlaufende Auflagefläche 24 bewirkt den Abschluss des Innenraums 4 vom Dauervakuum von der Verbindung 11, wobei - wie in Figur 13 gezeigt - vorzugsweise gleichzeitig die Zitze 14 massiert wird.

Entlang der Grenzlinie 37 des flexiblen übrigen Schlauchteils erfolgt der Übergang in den Dünnwandbereich 5. Durch diese vorzugsweise muldenförmige Ausbildung des flexiblen übrigen Schlauchteils 26 entlang der Grenzlinie 37 wird ein Einfallen des Dünnwandbereichs 5 in diese Muldenform erzielt, das zugleich ein Zusammenziehen der Muldenwangen des flexiblen Schlauchteils 26 bewirkt werden kann, so dass vorteilhafterweise zusätzlich von den Muldenwangen her eine Massage auf die Zitze 14 ausgeübt wird. Dieser Massageablauf erlaubt ebenfalls eine eng umfassende Melkbecherhülse 1 und bewirkt eine besonders effektive Massage und Blutrückführung an der Zitze.

Durch den Winkel 36 der Auflagefläche 24 zur Längsachse des Melkbechers und/oder auch durch die Höhe der Auflagefläche bei 30 kann der Zeitpunkt des Abschlusses im Zusammenhang mit der nachfolgenden Volumenreduzierung im Innenraum 4 vorgegeben werden. Dazu kann auch ein dickwandiger Abschlusskörper 31 (gestrichelt in Fig. 13) am Dünnwandbereich 5 dienen, der in seinen Abmessungen der ringförmigen Auflagefläche 24 zumindest im wesentlichen angepasst ist.

Zu erwähnen ist ferner, dass das erfindungsgemässe Prinzip eines Abschlusses durch Zusammenwirken einer Schrägring-Auflagefläche mit einem entsprechend flexiblen Zitzengummi-Wandungsbereich auch ohne Massagewirkung in einem Schlauchteil unterhalb der Zitze 14 realisiert werden kann.

Vorteilhafterweise wird die Auflagefläche 24 als verdicktes Wandteil eines Zitzengummis oder Melkbechers realisiert, jedoch kann die Stabilität des Abschlusses bzw. die Schaffung einer ringförmigen Auflagefläche 24 auch durch ein insbesondere unflexibles Einsteckteil erreicht werden.

Die Auflagefläche 24 kann beispielsweise nach einer weiteren Ausführungsvariante gemäss Figur 14 durch einen vorzugsweise angeformten Ring gebildet werden, wobei das Schlauchteil auch unterhalb des Abschlusses flexibel sein kann. Ein solcher Abschluss ist auch in einem üblichen Zitzengummi eines Zweiraumbechers zu verwirklichen. Durch das Zusammenwirken mit dem im Massagetakt kollabierenden Zitzengummi kann - wie in Figur 14 gezeigt - ein Abschluss des Innenraums 4 vom Dauervakuum erreicht werden.

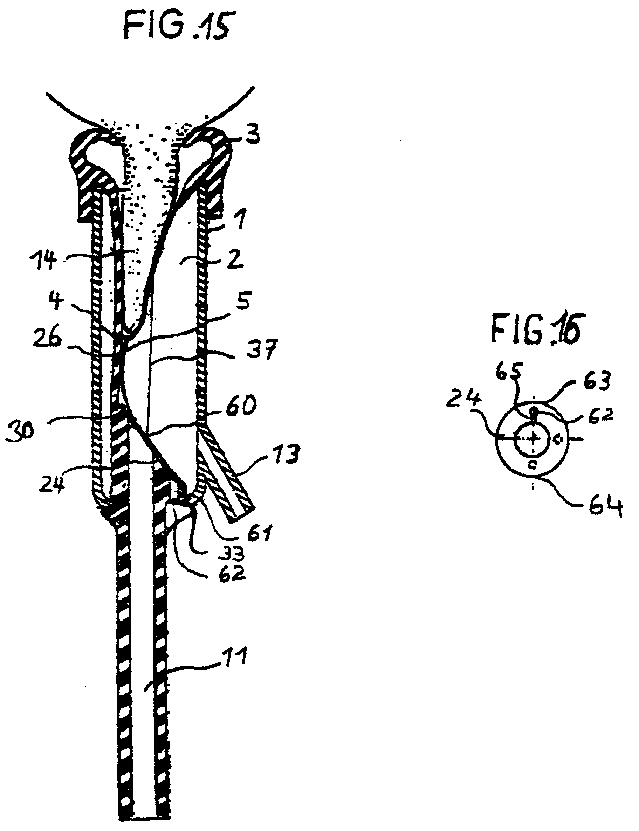

Figur 15 zeigt eine besonders vorteilhafte Ausführung des erfindungsgemässen Abschlusses mit einem der Zitze 14 und der Auflagefläche 24 zugeordneten Dünnwandbereich 5. Bei diesem Ausführungsbeispiel ist ein Verbindungskanal 61 mit einer Düse 62 vorgesehen, der im Saugtakt den Innenraum 4 mit Atmosphäre verbindet. Bei dem in Figur 15 dargestellten Ausführungsbeispiel mündet der Verbindungskanal 61 in den axial untenliegenden Bereich 33 der Auflagefläche 24. Die Figur 15 zeigt diese Anordnung im Massagetakt, wobei der Verbindungskanal 61 durch einen Dünnwandbereich 60 geschlossen ist. Der Verbindungskanal 61 kann am unteren Ende zur Atmosphäre hin oder am oberen Ende zum Abschluss hin mit einer Düse 62 versehen sein. Das muldenförmige Schlauchteil 26 kann sich in Richtung Dünnwandbereich verformen und so an der Massage beteiligt sein.

Im Saugtakt öffnet der Dünnwandbereich 60 die Vakuumverbindung 11 und die Atmosphärenverbindung des Verbindungskanals 61 zum Zitzenaufnahmeraum 4, so dass durch Lufteintritt ein zügiger Abtransport der im Saugtakt ermolkenen Milch erfolgen kann. Figur 15 zeigt deutlich, wie aufgrund der Ausgestaltung und Dimensionierung des Dünnwandbereichs 5, 60, auch eine besonders gute Massage der Zitzenspitze erreicht wird. Dies ist für die Eutergesundheit von grosser Bedeutung, da so eine Ausstülpung des sogenannten Strichkanals vermindert werden kann.

Figur 16 zeigt eine Draufsicht auf die Auflagefläche 24 aus Figur 15. Demgemäss kann durch die Anordnung des Lufteinlasses auf der Ringfläche des Abschlusses eine Veränderung des Zeitpunkts und der Zeitdauer der Belüftung erreicht werden kann. Ist die Atmosphärenverbindung, wie hier gezeigt, über die Düse 62 im Bereich des Beginns 63 (unten in Figur 15) der Anlage des Dünnwandbereichs 60 an der Ringfläche angeordnet, so erfolgt eine frühere Schliessung der Atmosphärenverbindung. Wird dieser Lufteinlass in Richtung Ende des Abschlussvorgangs (oben in Figur 15) bei 64 positioniert (gestrichelt), so wird eine längere Öffnung des Verbindungskanals 61 und eine grössere einströmende Luftmenge erzielt. Durch eine Verbindungsrinne 65 zwischen der Mündung des Verbindungskanals 61 und der Abschlussöffnung kann erreicht werden, dass auch im abgeschlossenen Zustand des Zitzenaufnahmeraumes vom Vakuum eine Belüftung des Milchflusses unterhalb des Abschlusses durch Atmosphäre erfolgt. Dadurch besteht die Möglichkeit, je nach Ausbildung der Verbindungsrinne 65 bei offenem und geschlossenem Abschluss unterschiedlich grosse Luftmenge einzusteuern.

Der Abschluss kann axial gesehen auch von zwei Schrägseiten gebildet werden, wobei in der Mitte der Spitze ein Steg verbleibt. In diesem Fall befindet sich der Verbindungskanal 61 auf einer Seite der Abschlussschräge.

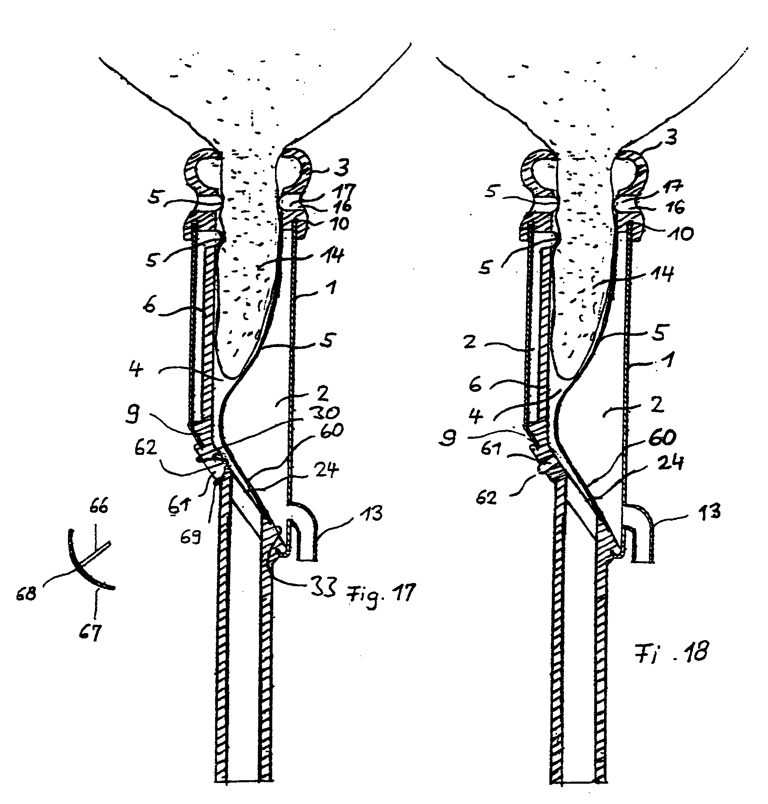

Figuren 17 und 18 zeigen weitere Ausführungsbeispiele eines Melkbechers im Massagetakt. Bei diesen besonders vorteilhaften Ausführungsbeispielen verläuft die untere Einspannstelle 9 nahezu parallel zur Auflagefläche 24. Der Vorteil dieser Lösung ist, dass der Verbindungskanal 61 extrem kurz ist und deshalb eine Verunreinigung weitgehend ausschliesst. Bei den in Fig. 17, 18 dargestellten Ausführungsbeispielen mündet der Verbindungskanal 61 in den in Axialrichtung obenliegenden Bereich der Auflagefläche 24. Der Übergangsbereich zwischen dem Zitzenaufnahmeraum (Schlauchteil) und dem radial zurückgestuften Anschluss stromabwärts der Auflagefläche ist dabei als Schrägschulter ausgeführt, in der Vorsprünge zum Eingriff mit dem entsprechend schräg nach unten verlaufenden Endabschnitt der Melkbecherhülse 1 ausgebildet sind.

Bei dem in Figur 17 dargestellten Ausführungsbeispiel ist im Verbindungskanal 61 durch eine Querschnittsverengung eine Düse 62 ausgebildet. Diese Querschnittsverengung kann beispielsweise durch einen sich zum Dünnwandbereich 5 hin auswölbenden Wandungsabschnitt ausgebildet werden, der aus der Auflagefläche 24 hervorsteht.

Die Reinigung dieser Düse 62 kann beispielsweise durch den Dünnwandbereich 5 - oder genauer gesagt, durch den auf der Auflagefläche 24 aufliegenden Teil 60 des Dünnwandbereiches erfolgen, der während des Massagetaktes in Anlage an die Düse 62 gelangt. Die Reinigung kann durch einen im Querschnitt pilzförmigen Reinigungsstift 68 verbessert werden, der einen kappenförmigen Filter 67 hat, der formschlüssig in eine umlaufende Ringwulst 69 im Mündungsbereich des Verbindungskanals 61 von aussen her einschnappbar ist. An dem Filter 67 ist eine Düsennadel 66 ausgebildet, die im Grundzustand, bei unverformtem Filter 67 im Abstand zur Düse steht. Durch Druck auf den elastischen ausgebildeten Filter 67 kann die Düsennadel 66 in die Düse 62 verschoben werden, so dass die Düsenöffnung gereinigt wird. Nach dem Entlasten des Reinigungsstiftes 68 wird dieser durch die Rückstellkraft des Filters 67 in seine Ruhestellung zurückgesetzt.

Bei dem in Figur 18 dargestellten Ausführungsbeispiels wölbt sich die Düse 62 aus dem Aussenumfang des Melkbechers beulenförmig heraus, wobei die elastischen Wandungen des Düse 62 eine einfache manuelle Reinigung von aussen ermöglichen. Die Düse 61 kann einstückig mit dem Zitzengummi oder als Einsatzteil ausgebildet werden.

### Bezugszeichenliste

- 1: Melkbecherwandung/Melkbecherhülse
- 2: Aussenraum
- 3: Zitzengummikopf
- 4: Innenraum
- 5: Dünnwandbereich
- 6: Zitzengummi / Schlauchteil
- 7: Wandbereich / Abspannstege
- 8: Dünnwandbereich nach aussen gestülpt, gestrichelt
- 9: Einspannstelle unten
- 10: Einspannstelle oben
- 11: Vakuum-Anschluss Innenraum
- 12: Dünnwandbereich nach innen gestülpt, gestrichelt
- 13: Stutzen
- 14: Zitze
- 15: Stützring
- 16: Atmosphären-Verbindung
- 17: Ringraum / Aussenraum
- 18: Drossel
- 19: Oberer Abschluss, 1. Aussenraum
- 21: Melkbecherhülse kurz
- 24: Auflagefläche
- 25: Einführungsring
- 26: Schlauchteil oberhalb Abschlussöffnung
- 27: Verbindung
- 28: Anschluss
- 29: stabile Wandung, aber flexibel
- 30: oberes Auflagenflächenende
- 31: Schliesskörper
- 33: unteres Auflagenflächenende
- 35: Dünnwandbereich (punktartig)
- 36: Winkel der Auflagefläche zur Längsachse
- 37: Grenzlinie des Dünnwandbereichs (gestrichelt)
- 60: Dünnwandbereich Abschluss
- 61: Verbindungskanal
- 62: Düse
- 63: Beginn des Abschlussvorgangs
- 64: Ende des Abschlussvorgangs
- 65: Verbindungsrinne
- 66: Düsennadel
- 67: Filter
- 68: Reinigungsstift

## Patentansprüche

1. Melkbecher mit einem Zitzengummi, wobei unterhalb eines Zitzenaufnahmebereichs eine oder zwei schräg zur Zitzengummilängsachse gelegene Auflageflächen eines Abschlusses (24) zum Vakuum ausgebildet sind, wobei die Auflagefläche (24) mittels eines gegenüberliegenden Dünnwandbereiches der Zitzengummiwandung zumindest teilweise verschließbar ist.

2. Melkbecher nach Anspruch 1, **dadurch gekennzeichnet, daß** der Abschluß (24) eine zumindest im wesentlichen ringförmige und formstabile Dicht- oder Auflagefläche (24) für den Dünnwandbereich (60) oder ein flächiges Abschlußelement (31) hat, das vom Dünnwandbereich (60) getragen oder in diesen integriert ist.

3. Melkbecher nach Anspruch 2, **dadurch gekennzeichnet, daß** sich der Dünnwandbereich (60) bis in den Zitzenaufnahmebereich erstreckt und dort eine Massagefunktion ausübt.

4. Melkbecher nach einem der vorhergehenden Ansprüche, **dadurch gekennzeichnet, daß** die Auflagefläche (24) einstückig mit dem Zitzengummi(6) ausgebildet ist.

5. Melkbecher nach Anspruch 2 oder 3, **dadurch gekennzeichnet, daß** die Auflagefläche (24) von einer schrägen Stimfläche eines in den Zitzengummi (6) einführ- und fixierbaren Steckteils gebildet ist.

6. Melkbecher nach einem der vorhergehenden Ansprüche, wobei der Zitzenaufnahmebereich durch einen am Abschluss (24) vorbeigeführten Kanal belüftet ist.

7. Melkbecher nach Anspruch 6, **dadurch gekennzeichnet, daß** der Kanal in der Auflagefläche (24) mündender Verbindungskanal (61) ist.

8. Melkbecher nach Anspruch 7, **dadurch gekennzeichnet daß** im Verbindungskanal (61) eine insbesondere aus einem flexiblen Material bestehenden Düse (62) so positioniert ist, daß sie von dem periodisch an der Auflagefläche (24) zur Anlage kommenden Dünnwandbereich (60) beaufschlagbar ist.

9. Melkbecher nach Anspruch 7, **dadurch gekennzeichnet, daß** einer Düse (62) des Verbindungskanals (61) eine verschiebbare Düsennadel (66) zur Reinigung zugeordnet ist.

10. Melkbecher nach Anspruch 7, **dadurch gekennzeichnet, daß** aus dem Verbindungskanal (61) eine vorzugsweise elastische, dünnwandige Düse (62) atmosphärenseitig kuppelförmig vorsteht.

11. Melkbecher nach einem der vorhergehenden Ansprüche, **dadurch gekennzeichnet, daß** eine untere Einspannstelle (9) des Zitzengummis (6) nahezu parallel zur Auflagefläche (24) verläuft.

12. Melkbecher nach einem der vorhergehenden Ansprüche, **dadurch gekennzeichnet, daß** in der Umfangswandung eines zur Zitzenaufnahme bestimmten Schlauchteils des Zitzengummis (3, 6) zumindest ein Dünnwandbereich (5, 35, 60) ausgebildet ist.

13. Melkbecher nach Anspruch 12, **dadurch gekennzeichnet, daß** ein Dünnwandbereich (5, 35, 60) zumindest teilweise zwischen eine Abspann- bzw. Abstützfunktion besitzenden Wandungs- und/oder Stegteilen (7) des Zitzengummis (3, 6) angeordnet ist.

14. Melkbecher nach Anspruch 12 oder 13, **dadurch gekennzeichnet, daß** die aussenliegende Außenfläche des Dünnwandbereichs (5, 35, 60) mit unterschiedlichen Drücken, beispielsweise mit Unterdruck, Atmosphären- oder Überdruck beaufschlagbar sind.

15. Melkbecher nach Anspruch 14, **dadurch gekennzeichnet, daß** am Zitzengummi (3, 6) zumindest zwei axial oder radial zueinander versetzte Dünnwandbereiche (5, 35, 60) ausgebildet sind, wobei daran radial angrenzende Außenräume (2, 17) getrennt mit Drücken beaufschlagbar sind oder zumindest teilweise miteinander über einen, vorzugsweise drosselbaren, Kanal (27) verbunden sind.

16. Melkbecher nach einem der vorhergehenden Ansprüche, **dadurch gekennzeichnet, daß** zumindest ein vorzugsweiser teilringförmiger Dünnwandbereich (5) im Bereich eines Kopfteils (3) des Zitzengummis oberoder unterhalb einer oberen Einspannstelle (10) oder eines Einführungsringes (25) ausgebildet ist, der im differenzdruckfreien Zustande insbesondere eine gewellte oder nach innen oder außen gestülpte Form aufweist.

17. Melkbecher nach Anspruch 15, **dadurch gekennzeichnet, daß** der an den Dünnwandbereich (5) angrenzenden Außenraum (17) vorzugsweise in Abhängigkeit vom Vakuum eines unterhalb der Zitze (14) gelegenen Innenraums (4) des Zitzengummis (3, 6) mit Atmosphärenoder Überdruck oder in Abhängigkeit von einer Positionsänderung des Melkbechers mit Überdruck ansteuerbar ist.

18. Melkbecher nach einem der vorhergehenden Ansprüche, **dadurch gekennzeichnet**, die Wandungsstärken des Dünnwandbereichs (5, 35, 60) und der dickeren Wandungsbereiche des Zitzengummis (3, 6)in Abhängigkeit von der zeitlichen Abfolge der Phasen des Melkvorgangs, insbesondere bezüglich der Massagephase und des Abschlusses gegenüber einer Niederdruckquelle, gewählt sind.

19. Melkbecher nach einem der vorhergehenden Ansprüche, **dadurch gekennzeichnet, daß** die Melkbecherhülse und der Zitzengummi (3, 6) durch geeignete Wahl der Wandstärke des Zitzengummis (3, 6) und der Dünnwandbereiche (5) einstückig ausgebildet sind.

20. Melkbecher nach einem der vorhergehenden Ansprüche, **dadurch gekennzeichnet, daß** die Verformungsrichtung des Zitzengummis (3, 6) durch geeignete Wahl der Wandstärken des Zitzengummis (3, 6) oder Formgebung der Melkbecherhülse vorbestimmt ist.

21. Melkbecher nach einem der vorhergehenden Ansprüche, **dadurch gekennzeichnet, daß** der Abschluß (34) durch Einwölben der am Abschluß außenliegenden Zitzengummiwandung erfolgt.

22. Zitzengummi, insbesondere für einen Melkbecher nach einem der vorhergehenden Ansprüche, wobei in einer Umfangswandung eines zur Zitzenaufnahme bestimmten Schlauchteils ein schräg verlaufender Abschluß (34) ausgebildet ist, der durch eine gegenüberliegende Zitzengummiwandung verschließbar ist.

## Claims

1. A teat cup comprising a liner, wherein one or two supporting faces of a closing (24) to the vacuum inclined with respect to the longitudinal axis of the liner are formed below a teat receiving portion, the supporting face (24) being adapted to be closed at least partially by an opposite thin-wall portion of the liner wall.

2. A teat cup according to claim 1, **characterized in that** the closing (24) has an at least substantially annular and dimensionally stable sealing or supporting face (24) for the thin-wall portion (60) or a planar closing member (31) which is supported by the thin-wall portion (60) or is integrated in the same.

3. A teat cup according to claim 2, **characterized in that** the thin-wall portion (60) extends into the teat receiving portion and exerts a massage function there.

4. A teat cup according to any one of the preceding claims, **characterized in that** the supporting face (24) is formed integrally with the liner (6).

5. A teat cup according to claim 2 or 3, **characterized in that** the supporting face (24) is formed by an inclined front of an insert adapted to be introduced and fixed in the liner (6).

6. A teat cup according to any one of the preceding claims, wherein the teat receiving portion is ventilated by a duct passed by the closing (24).

7. A teat cup according to claim 6, **characterized in that** the duct is a communicating duct (61) opening into the supporting face (24).

8. A teat cup according to claim 7, **characterized in that** a nozzle (62) especially consisting of a flexible material is positioned in the communicating duct (61) such that it can be pressurized by the thin-wall portion (60) periodically contacting the supporting face (24).

9. A teat cup according to claim 7, **characterized in that** a movable nozzle pin (66) is assigned to a nozzle (62) of the communicating duct (61) for cleaning.

10. A teat cup according to claim 7, **characterized in that** a preferably elastic thin-wall nozzle (62) projects dome-shaped at the atmosphere side from the communicating duct (61).

11. A teat cup according to any one of the preceding claims, **characterized in that** a lower clamping position (9) of the liner (6) extends almost in parallel to the supporting face (24).

12. A teat cup according to any one of the preceding claims, **characterized in that** at least one thin-wall portion (5, 35, 60) is formed in the circumferential wall of a hose part of the liner (3, 6) intended for receiving the teat.

13. A teat cup according to claim 12, **characterized in that** a thin-wall portion (5, 35, 60) is arranged at least partially between wall and/or web parts (7) of the liner (3, 6) having an anchoring and supporting function, respectively.

14. A teat cup according to claim 12 or 13, **characterized in that** different pressures, for instance negative pressure, atmospheric or excess pressure, can be applied to the external outer face of the thin-wall portion (5, 35, 60).

15. A teat cup according to claim 14, **characterized in that** at least two axially or radially offset thin-wall portions (5, 35, 60) are formed at the liner (3, 6), wherein pressures can be separately applied to exterior spaces (2, 17) radially adjacent thereto or the latter are communicated with each other at least partially through a duct (27) preferably adapted to be throttled.

16. A teat cup according to any one of the preceding claims, **characterized in that** at least a preferably partly annular thin-wall portion (5) is formed in the area of the head portion (3) of the liner above or below an upper clamping position (10) or an inserting ring (25) having especially an undulated or inwardly or outwardly turned shape in a state free of differential pressure.

17. A teat cup according to claim 15, **characterized in that** the exterior space (17) adjacent to the thin-wall portion (5) can be controlled by atmospheric or excess pressure preferably in response to the vacuum of an interior space (4) of the liner (3, 6) located below the teat (14) or by excess pressure in response to a change of position of the teat cup.

18. A teat cup according to any one of the preceding claims, **characterized in that** the wall thicknesses of the thin-wall portion (5, 35, 60) and of the thicker wall portions of the liner (3, 6) are selected in response to the time sequence of the phases of the milking operation, especially with respect to the massage phase and the closing vis-a-vis a negative pressure source.

19. A teat cup according to any one of the preceding claims, **characterized in that** the teat cup sleeve and the liner (3, 6) are formed in one piece by appropriately selecting the wall thickness of the liner (3, 6) and of the thin-wall portions (5).

20. A teat cup according to any one of the preceding claims, **characterized in that** the direction of deformation of the liner (3, 6) is predetermined by an appropriate selection of the wall thicknesses of the liner (3, 6) or the shaping of the teat cup sleeve.

21. A teat cup according to any one of the preceding claims, **characterized in that** the closing (34) is effected by arching the liner wall located at the outside of the closing.

22. A liner, in particular for a teat cup according to any one of the claims, wherein an obliquely extending closing (34) which can be closed by an opposite liner wall is formed in a circumferential wall of a hose part intended for receiving the teat.

## Revendications

1. Gobelet trayeur avec un dispositif de trayons en caoutchouc, dans lequel au-dessous d'une zone de réception de trayons sont conçues une ou deux surfaces d'appui d'une fermeture (24) pour le vide, disposées obliquement par rapport à l'axe longitudinal du dispositif de trayons en caoutchouc, gobelet dans lequel la surface d'appui (24) peut être obturée au moins partiellement au moyen d'une zone de paroi mince en regard de la paroi du dispositif de trayons en caoutchouc.

2. Gobelet trayeur selon la revendication 1, **caractérisé en ce que** la fermeture (24) possède une surface d'étanchéité ou d'appui (24) au moins essentiellement annulaire ou indéformable pour la zone de paroi mince (60) ou un élément de fermeture planaire (31) qui est porté par la zone de paroi mince (60) ou intégré dans celle-ci.

3. Gobelet trayeur selon la revendication 2, **caractérisé en ce que** la zone de paroi mince (60) s'étend jusque dans la zone de réception des trayons et y exerce une fonction de massage.

4. Gobelet trayeur selon l'une des revendications précédentes, **caractérisé en ce que** la surface d'appui (24) est conçue d'un seul tenant avec le dispositif de trayons en caoutchouc (6).

5. Gobelet trayeur selon la revendication 2 ou 3, **caractérisé en ce que** la surface d'appui (24) est formée par une surface frontale oblique d'une pièce enfichable pouvant être introduite et fixée dans le dispositif de trayons en caoutchouc (8).

6. Gobelet trayeur selon l'une des revendications précédentes, dans lequel la zone de réception des trayons est ventilée par un canal amené devant la fermeture (24).

7. Gobelet trayeur selon la revendication 6, **caractérisé en ce que** le canal est un canal de liaison (61) débouchant dans la surface d'appui (24).

8. Gobelet trayeur selon la revendication 7, **caractérisé en ce que** dans le canal de liaison (61) une tuyère (62) consistant particulièrement en un matériau souple est positionnée de telle sorte qu'elle peut être sollicitée par la zone de paroi mince (60) venant périodiquement en butée contre la surface d'appui (24).

9. Gobelet trayeur selon la revendication 7, **caractérisé en ce qu'**une aiguille de tuyère mobile (66) destinée au nettoyage est associée à une tuyère (62) du canal de liaison (61).

10. Gobelet trayeur selon la revendication 7, **caractérisé en ce qu'**à partir du canal de liaison (61) fait saillie une tuyère (62) à paroi mince, de préférence élastique, en forme de dôme sur le côté atmosphère.

11. Gobelet trayeur selon l'une des revendications précédentes, **caractérisé en ce qu'**un point de serrage inférieur (9) du dispositif de trayons en caoutchouc (6) s'étend presque parallèlement à la surface d'appui (24).

12. Gobelet trayeur selon l'une des revendications précédentes, **caractérisé en ce que** dans la paroi périphérique d'une partie de tuyau flexible du dispositif de trayons en caoutchouc (3,6) destinée à recevoir les trayons est prévue au moins une zone de paroi mince (5,35,60).

13. Gobelet trayeur selon la revendication 12, **caractérisé en ce qu'**il est disposé une zone de paroi mince (5,35,60) au moins partiellement entre des parties de barrette et/ou de paroi (7) du dispositif de trayons en caoutchouc (3,6), possédant une fonction d'appui ou de tension.

14. Gobelet trayeur selon la revendication 12 ou 13, **caractérisé en ce que** la surface extérieure de la zone de paroi mince (5,35,60) peut être sollicitée par des pressions différentes, par exemple par une dépression, une pression atmosphérique ou une surpression.

15. Gobelet trayeur selon la revendication 14, **caractérisé en ce que** sur le dispositif de trayons en caoutchouc (3,6) sont conçues au moins deux zones de paroi mince (5,35,60) décalées axialement ou radialement entre elles, dans lequel les espaces extérieurs radialement limitrophes de celles-ci (2,17) peuvent être sollicités séparément par des pressions ou sont raccordés au moins partiellement entre eux par le biais d'un canal (27), de préférence à étranglement.

16. Gobelet trayeur selon l'une quelconque des revendications précédentes, **caractérisé en ce qu'**il est prévu au moins une zone de paroi mince (5) de préférence en forme d'anneau partiel au niveau d'une partie de tête (3) du dispositif de trayons en caoutchouc au-dessus ou au-dessous d'un point de serrage supérieur (10) ou d'un anneau d'introduction (25) qui, à l'état exempt de pressions différentielles, présente notamment une forme ondulée ou évasée vers l'intérieur ou vers l'extérieur.

17. Gobelet trayeur selon la revendication 15, **caractérisé en ce que** l'espace extérieur (17) limitrophe de la zone de paroi mince (5) peut être piloté de préférence en fonction du vide d'un espace intérieur (4), situé au-dessous du trayon (14), du dispositif de trayons en caoutchouc (3,6), avec la pression atmosphérique ou la surpression ou en fonction d'une modification de position du gobelet trayeur avec une surpression.

18. Gobelet trayeur selon l'une des revendications précédentes, **caractérisé en ce que** les épaisseurs de paroi de la zone de paroi mince (5,35,60) et des zones de paroi plus épaisses du dispositif de trayons en caoutchouc (3,6) sont choisies en fonction du déroulement dans le temps des phases de traite, notamment à l'égard de l'opération de massage et de la fermeture face à une source de basse pression.

19. Gobelet trayeur selon l'une des revendications précédentes, **caractérisé en ce que** l'enveloppe du gobelet trayeur et le dispositif de trayons en caoutchouc (3,6) sont conçus d'un seul tenant par le biais d'une sélection appropriée de l'épaisseur de paroi du dispositif de trayons en caoutchouc (3,6) et des zones de paroi mince (5).

20. Gobelet trayeur selon l'une des revendications précédentes, **caractérisé en ce que** la direction de déformation du dispositif de trayons en caoutchouc (3,6) est prédéterminée par la sélection appropriée des épaisseurs de paroi du dispositif de trayons en caoutchouc (3,6) ou de la configuration de l'enveloppe du gobelet trayeur.

21. Gobelet trayeur selon l'une des revendications précédentes, **caractérisé en ce que** la fermeture (34) s'effectue par incurvation de la paroi du dispositif de trayons en caoutchouc située à l'extérieur de la fermeture.

22. Dispositif de trayons en caoutchouc, en particulier pour un gobelet trayeur selon l'une des revendications précédentes, dans lequel dans une paroi périphérique d'une partie de tuyau flexible destinée à recevoir les trayons est prévue une fermeture (34) s'étendant obliquement qui peut être obturée par une paroi du dispositif de trayons en caoutchouc se trouvant en regard.
